# EUROPÄISCHE PATENTSCHRIFT

(11) **EP 1 205 658 B1**
(45) Veröffentlichungstag und Bekanntmachung des Hinweises auf die Patenterteilung: **01.06.2005**
(21) Anmeldenummer: 00124090.2
(22) Anmeldetag: 07.11.2000
(51) Int. Cl.: F02F 7/00, F02F 1/10

(54) **Zylinderblock für eine Verbrennungskraftmaschine**
Cylinder block for an internal combustion engine
Bloc-cylindres pour un moteur à combustion interne

(43) Veröffentlichungstag der Anmeldung: 15.05.2002
(73) Patentinhaber: Ford Global Technologies, LLC, Dearborn, MI 48126 (US)
(72) Erfinder: Metz, Hans Walter, 50259 Pulheim (DE); Laufenberg, Dietmar, 51570 Windeck-Hurst (DE)
(74) Vertreter: Drömer, Hans-Carsten, Dipl.-Ing.

(56) Entgegenhaltungen:
- DE-A- 2 216 340
- DE-C- 3 920 845
- GB-A- 415 296
- US-A- 3 952 393
- US-A- 5 799 635
- PATENT ABSTRACTS OF JAPAN vol. 015, no. 264 (M-1132), 4. Juli 1991 (1991-07-04) & JP 03 088975 A (HITACHI LTD), 15. April 1991 (1991-04-15)

## Beschreibung

Die Erfindung betrifft eine Verbrennungskraftmaschine mit einem Zylinderblock mit an den Zylinderbohrungen angebrachter Fase zum Einsetzen der Kolben.

Da die Kolbenringe im ungespannten Zustand einen grösseren Durchmesser aufweisen als die Zylinderbohrung, müssen die Ringe bei der Montage des Kolbens gespannt und in gespanntem Zustand axial in die Zylinderbohrung eingeführt werden. Damit dabei die Lauffläche der Zylinderbohrung und die Kolbenringe möglichst wenig beschädigt werden, setzt man Spannwerkzeuge auf die Oberseite (dem Zylinderkopf zugewandt) des Zylinderblocks auf und zentriert diese über eine an der Zylinderbohrung angebrachte Fase.

Aus DE 39 20 845-C1 ist ein Montagewerkzeug zum Einsetzen von mit Kolbenringen versehenen Kolben in einen Zylinder bekannt. Das Werkzeug wird auf die Fase der Zylinderbohrung aufgesetzt. Das Anbringen der Fase auf der Zylinderoberseite ist ausserordentlich nachteilig, da die Fase selbst und der sie umgebende Hohlraum zwischen Zylinderwand/Kolbenring/Kolben einerseits sowie Dichtung und Zylinderkopf andererseits strömungsmässig einen Totraum darstellt und die Verbrennung in diesen Bereichen nur unvollständig erfolgt. Dies führt zur erhöhten Kohlenwasserstoffemission.

Aus GB-A-415 296 ist eine Verbrennungskraftmaschine mit einem Zylinderblock mit an den Zylinderbohrungen angebrachten Fasen zum Einsetzen der Zylinder, wobei die Fasen als Bestandteil des Zylinderblockes (3) an dessen kurbelwellenseitigem Ende ausgebildet sind. Diese Fasen dienen der Aufnahme von Auschrägungen eines Spannwerkzeuges. Die Verwendung von Spannwerkzeugen kann zur Verletzung der Kolbenringe führen und erfordert zusätzliche Montageschritte.

Aufgabe der Erfindung war es, diese Nachteile zu vermeiden.

Erfindungsgemäss ist vorgesehen, dass ein Teil des kurbelwellenseitigen Endes der Zylinderbohrung als Anlaufkonus (31) ausgebildet ist.

Durch diese erfindungsgemässe Massnahme ergeben sich zahlreiche Vorteile. Zum einen kann die Fase an der Zylinderblockoberseite entfallen, allenfalls wird die Zylinderkante leicht gebrochen. Dadurch kann die Dichtung näher an die Zylinderbohrungswand herangezogen werden, entsprechend kann auch der Brennraumdurchmesser im Zylinderkopf an dieser Stelle näher an die

Zylinderbohrungswand herangeführt werden. Hierdurch verringert sich das Totraumvolumen und die Rohemissionen des Motors werden deutlich verbessert. Da die Dichtung zwischen den Zylinderbohrungen eine gewisse Mindeststegbreite aufweisen muss, damit die Dichtfunktion ausreichend gewährleistet ist und die Dichtung jetzt näher an die Zylinderbohrungswand herangeführt werden kann, können insgesamt die Zylinder dichter aneinanderrücken. Hierdurch kann die Baulänge des Motors verringert werden.

Ausserdem ergeben sich fertigungstechnische Vorteile. Die früher an der Zylinderblockoberseite angebrachte Fase stellte im Verhältnis zu dem Montagewerkzeug immer einen stufenförmigen Übergang dar. An diesem Übergang kam es häufig zu Beschädigungen der Kolbenringe, dies wird jetzt vermieden. Ausserdem ist die Montage wesentlich vereinfacht. Das Anbringen und Ausrichten des Montagewerkzeuges für jeden einzelnen Kolben entfällt. Femer werden die Kolbenringe anders als bei einem Spannwerkzeug durch das Einführen über den Anlaufkonus über den Umfang gleichmässig gespannt. Hierdurch wird ebenfalls Beschädigungen der Kolbenringe vermieden.

Schliesslich weist der Motor eine verbesserte Reparaturfähigkeit auf, da Kolben und Kolbenringe ggf. auch nach einer Bearbeitung der Zylinderlauffläche sicher montiert werden können.

Der Anlaufkonus kann insbesondere über seine Höhe h nicht nur einen Öffnungswinkel δ aufweisen, sondern mehrere. Insbesondere kann der Anlaufkonus von seinem unteren kurbelwellenseitigen Ende zur Zylinderlauffläche hin einen kurvenförmigen oder wellenförmigen Verlauf aufweisen. Eine bevorzugte Form kann darin bestehen, dass der Öffnungswinkel δ von einem ersten kleinen Wert -insbesondere dem Wert Null- auf einen Maximalwert (Wendepunkt) ansteigt und dann zur Zylinderlauffläche auf einen zweiten kleinen Wert -insbesondere den Wert Null- abnimmt. Hierdurch kann das Risiko der Beschädigung der Kolbenringe noch weiter gesenkt werden.

Die Öffnung des Anlaufkonus ist an seinem unteren Ende (B1) grösser als der maximale Durchmesser aller Kolbenringe ist - dies gilt auch, wenn die Kolbenringe in radialer Richtung zueinander bzw. zur Kolbenachse versetzt sind - kann der Kolben sicher montiert werden. Hierdurch werden Beschädigungen der ungespannten Kolbenringe, insbesondere auch bei radialem Versatz der Kolbenringe in der Kolbenringnut, vermieden.

Bevorzugt ist die Höhe h des Anlaufkonus in axialer Richtung der Zylinderbohrung mindestens gleich dem max. Abstand t des obersten Kolbenringes von der Kolbendeckfläche (gemessen an deren Umfang, falls die Deckfläche nicht eben ist). Durch die vorgesehene Mindesthöhe ist sichergestellt, dass zunächst der Kolben selbst im Anlaufkonus geführt wird bevor der erste Kolbenring in den Bereich der unteren Öffnung des Anlaufkonus gelangt. Hierdurch wird vermieden, dass der obere Kolbenring gegen die Unterkante des Anlaufkonus verkantet.

Bevorzugt ist die Höhe des Anlaufkonus an den Abstand der Kolbendeckfläche vom ersten Kolbenring angepasst.

Weiter bevorzugt ist, dass der Maximalwert des Öffnungswinkels (δ) des Anlaufkonus 45° nicht übersteigt.

Durch die Einstellung des Öffnungswinkels des Anlaufkonus wird die Montierbarkeit der Kolben weiter verbessert.

Anhand der schematischen Abbildungen wird die Erfindung näher erläutert:

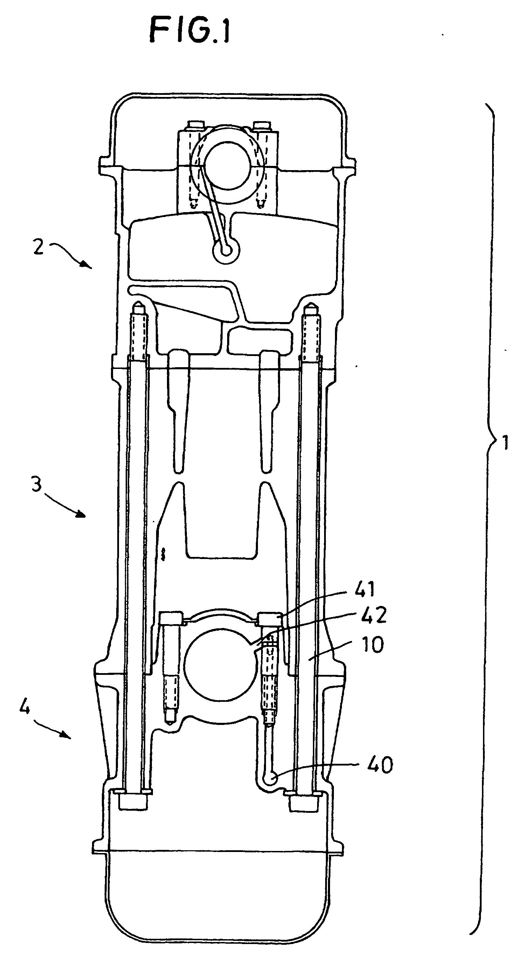

In Fig. 1 ist in einer schematischen Übersicht der grundsätzliche Aufbau einer Verbrennungskraftmaschine dargestettt, in der die Erfindung zum Einsatz kommt.

Die Verbrennungskraftmaschine 1 setzt sich zusammen aus dem Zylinderkopf 2, dem Zylinderblock 3 und einem Grundrahmen 4. Mindestens Zylinderblock 3 und Grundrahmen 4 sind mit Bolzen 10 verbunden. Zusätzlich ist es von Vorteil auch den Zylinderkopf 2, Zylinderblock 3 und Grundrahmen 4 mit durchgehenden Bolzen 10 zu versehen weil dann der Zylinderblock 3 nur auf Druckkräfte beansprucht wird. Die Kurbelwellenlagerdeckel sind durch Bolzen von oben auf den Grundrahmen geschraubt. Bevorzugt ist jeweils einer der Befestigungsbolzen des Kurbelwellenlagerdeckels als Hohlbolzen ausgeführt und mit der Ölgalerie 40 verbunden. Dadurch kann auf besonders günstige Weise die Ölversorgung des Kurbelwellenlagers über eine Bohrung 42 erfolgen.

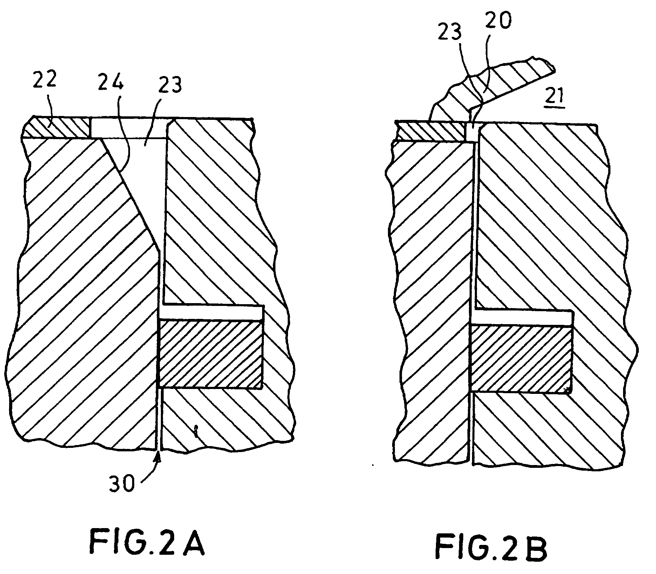

Fig. 2 zeigt eine Gegenüberstellung der Ausführung nach dem Stand der Technik (2A) gegenüber der Ausführung gemäss der Erfindung (2B).

Bei der Ausführung nach dem Stand der Technik ist das Totvolumen 23 aufgrund der an der Zylinderbohrung 30 angebrachten Fase erheblich grösser als bei der erfindungsgemässen Ausführung. Das Totvolumen 23 wird noch dadurch vergrössert, dass auch die Dichtung 22 nur bis an den äusseren Durchmesser der Fase 24 herangehen kann. Schliesslich ist auch der Durchmesser des Brennraumes 21 im Zylinderkopf 20 entsprechend dem Dichtungsdurchmesser anzupassen. Dies führt dazu, dass ein relativ grosses Totvolumen entsteht. Speziell kann mit der neuen Blockgeometrie bis zu 80 % weniger Totvolumen erreicht werden. Außerdem kann die Baulänge des Motors um ca. 8 mm verringert werden (4 Zylinder mal Durchmesserdifferenz mit/ohne Fase) weil die Zylinderbohrung 30 an der dem Zylinderkopf zugewandten Ende im wesentliche ohne konischen Abschnitt verläuft.

In der Fig. 2 ist nur der Teil dargestellt, der bis zur Oberfläche der Dichtung bzw. zur Mantelfläche des Kolbens geht. Tatsächlich kann sich das Totvolumen noch bis in den Bereich des Brennraumes erstrecken.

Demgegenüber kann bei der erfindungsgemässen Ausführung auf die Anbringung der Fase an der Deckfläche des Zylinderblockes verzichtet werden. Dadurch kann die Dichtung wesentlich näher an die Zylinderbohrungsfläche 30 herangeführt werden. Entsprechend kann auch der Brennraum weiter zur Mittellinie der Zylinderbohrung geführt werden. Dies führt zu einer wesentlichen Verringerung des Totvolumens 23.

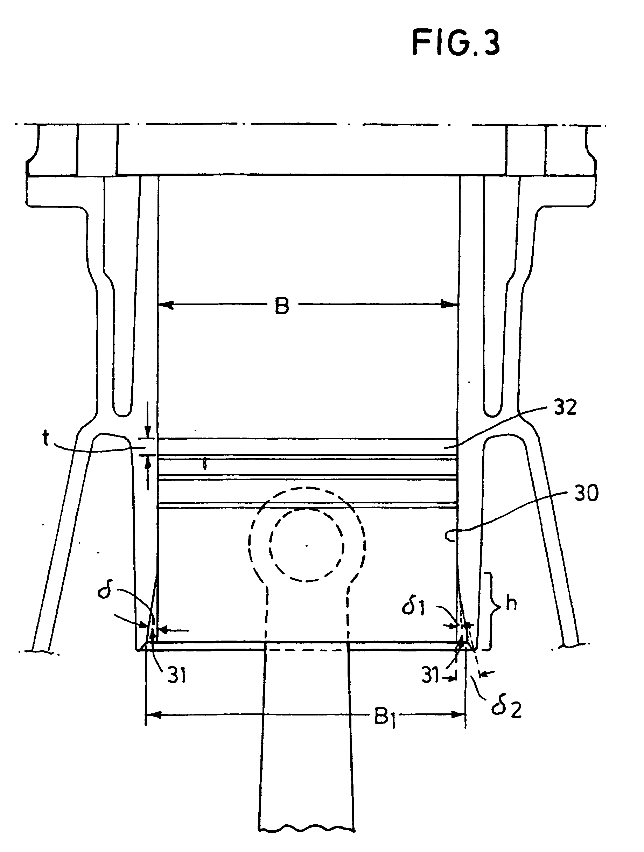

In Fig. 3 ist der Kolben 32 in der Zylinderbohrung 30 und der Anlaufkonus 31 dargestellt. Der Anlaufkonus 31 ist als Teil der Zylinderwandung ausgeführt. Im Bereich des Anlaufkonus ist der Durchmesser B1 grösser als der Zylinderbohrungsdurchmesser B. Die Höhe h des Anlaufkonus 31 ist insbesondere höher als der Abstand t des oberen Kolbenringes von der Oberkante des Kolbens. Der Öffnungswinkel (δ) des Anlaufkonus beträgt in einem überwiegenden Abschnitt bevorzugt weniger als 30°. Insbesondere können, wie auch in der Zeichnung dargestellt, über die Höhe des Anlaufkonus verschiedene Öffnungswinkel aneinander anschliessen.

Ein wesentlicher Vorteil der erfindungsgemässen Ausführung ist, dass bei einem Reihenmotor sämtliche Kolben in einer vormontierten Einheit zusammen mit der Kurbelwelle in den Zylinderblock eingeführt werden können. Dabei kann, z.B. durch einen an der Kolbendeckfläche angreifendes Werkzeug, welches insbesondere auch in der Zylinderbohrung geführt wird, die Einführung der Kolben in die Anlaufkonen und Zylinderbohrungen bewirkt werden.

## Patentansprüche

1. Verbrennungskraftmaschine mit einem Zylinderblock mit an den Zylinderbohrungen angebrachten Fasen zum Einsetzen der Kolben,
wobei
die Fasen als Bestandteil des Zylinderblockes (3) an dessen kurbelwellenseitigem Ende ausgebildet sind,
**dadurch gekennzeichnet, dass** die Fasen an jeder Zylinderbohrung (30) einen Anlaufkonus (31) zum Einführen der Kolben (32) und Spannen der Kolbenringe bilden und
die Öffnung (B1) des Anlaufkonus (31) an seinem unteren Ende grösser als der maximale Durchmesser aller Kolbenringe, auch wenn die Kolbenringe in radialer Richtung zueinander bzw. zur Kolbenachse versetzt sind.

2. Verbrennungskraftmaschine nach Anspruch 1 ,
**dadurch gekennzeichnet, dass**
die Höhe (h) des Anlaufkonus (31) in axialer Richtung der Zylinderbohrung (30) mindestens gleich dem maximalen Abstand (t) des obersten Kolbenringes von der Kolbendeckfläche ist.

3. Verbrennungskraftmaschine nach einem der Ansprüche 1 oder 2,
**dadurch gekennzeichnet, dass**
der Öffnungswinkel (δ) des Anlaufkonus (31) kleiner als 45° ist.

4. Verbrennungskraftmaschine nach einem der vorhergehenden Ansprüche,
**dadurch gekennzeichnet, dass**
der Anlaufkonus (31) über seine Höhe h verschiedene Öffnungswinkel (δ) aufweist.

5. Verbrennungskraftmaschine nach Anspruch 4,
**dadurch gekennzeichnet, dass**
der Anlaufkonus (31) einen kurvenförmigen Verlauf aufweist.

6. Verbrennungskraftmaschine nach Anspruch 5,
**dadurch gekennzeichnet, dass**
der Öffnungswinkel (δ) des Anlaufkonus' an seinem. unteren Ende einen ersten kleinen Wert aufweist, der Öffnungswinkel (δ) zur Zylinderblockoberseite hin auf einen Maximalwert ansteigt und dann zur Zylinderlauffläche hin auf einen zweiten kleinen Wert wieder abnimmt.

7. Verbrennungskraftmaschine nach Anspruch 6,
**dadurch gekennzeichnet, dass**
der erste und zweite kleine Wert des Öffnungswinkels (δ) etwa Null Grad betragen.

8. Verbrennungskraftmaschine nach einem der vorhergehenden Ansprüche,
**dadurch gekennzeichnet, dass**
die Zylinderbohrung (30) an der dem Zylinderkopf zugewandten Ende im wesentliche ohne konischen Abschnitt verläuft.

## Claims

1. Internal combustion engine having a cylinder block with bevels arranged at the cylinder bores for insertion of the pistons, the bevels being formed as part of the cylinder block (3), on its crankshaft-side end, **characterized in that** the bevels on each cylinder bore (30) form a run-up cone (31) for introduction of the pistons (32) and tensioning of the piston rings, and the opening (B1) of the run-up cone (31), at its lower end, is larger than the maximum diameter of all the piston rings, even if the piston rings are radially offset with respect to one another and/or with respect to the piston axis.

2. Internal combustion engine according to Claim 1, **characterized in that** the height (h) of the run-up cone (31) in the axial direction of the cylinder bore (30) is at least equal to the maximum distance (t) of the uppermost piston ring from the piston top surface.

3. Internal combustion engine according to one of Claims 1 or 2, **characterized in that** the included angle (δ) of the run-up cone (31) is less than 45°.

4. Internal combustion engine according to one of the preceding claims, **characterized in that** the run-up cone (31) has different included angles (δ) over its height (h).

5. Internal combustion engine according to Claim 4, **characterized in that** the run-up cone (31) has a curved profile.

6. Internal combustion engine according to Claim 5, **characterized in that** the included angle (δ) of the run-up cone, at its lower end, adopts a first, small value, the included angle (δ) increases towards the top side of the cylinder block, to a maximum value, and then decreases again, towards the cylinder liner, to a second, small value.

7. Internal combustion engine according to Claim 6, **characterized in that** the first and second small values for the included angle (δ) are approximately 0°.

8. Internal combustion engine according to one of the preceding claims, **characterized in that** the profile of the cylinder bore (30) at the end facing the cylinder head substantially does not have a conical section.

## Revendications

1. Moteur à combustion interne ayant un bloc-cylindres comprenant des biseaux prévus sur les alésages des cylindres pour l'insertion des pistons, dans lequel les biseaux sont réalisés sous forme de composant du bloc-cylindres (3) sur son extrémité du côté du vilebrequin, **caractérisé en ce que** les biseaux forment sur chaque alésage de cylindre (30) un cône de montée (31) pour l'introduction des pistons (32) et pour le serrage des segments de piston et **en ce que** l'ouverture (B1) du cône de montée (31) est supérieure à son extrémité inférieure au diamètre maximal de tous les segments de piston même lorsque les segments de piston sont décalés dans la direction radiale les uns par rapport aux autres ou par rapport à l'axe du piston.

2. Moteur à combustion interne selon la revendication 1, **caractérisé en ce que** la hauteur (h) du cône de montée (31) dans la direction axiale de l'alésage de cylindre (30) est au moins égale à la distance maximale (t) du segment de piston le plus haut à la face de recouvrement du piston.

3. Moteur à combustion interne selon l'une quelconque des revendications 1 à 2, **caractérisé en ce que** l'angle d'ouverture (δ) du cône de montée (31) est inférieur à 45°.

4. Moteur à combustion interne selon l'une quelconque des revendications précédentes, **caractérisé en ce que** le cône de montée (31) présente différents angles d'ouverture (δ) sur toute sa hauteur h.

5. Moteur à combustion interne selon la revendication 4, **caractérisé en ce que** le cône de montée (31) présente une allure en forme de courbe.

6. Moteur à combustion interne selon la revendication 5, **caractérisé en ce que** l'angle d'ouverture (δ) du cône de montée présente au niveau de son extrémité inférieure une première petite valeur, l'angle d'ouverture (δ) vers le côté supérieur du bloc-cylindres augmente à une valeur maximale puis diminue à nouveau vers la surface de contact des cylindres jusqu'à une deuxième petite valeur.

7. Moteur à combustion interne selon la revendication 6, **caractérisé en ce que** la première et la deuxième petite valeur de l'angle d'ouverture (δ) valent environ zéro degré.

8. Moteur à combustion interne selon l'une quelconque des revendications précédentes, **caractérisé en ce que** l'alésage de cylindre (30) à l'extrémité tournée vers la culasse s'étend essentiellement sans portion conique.
